# FASCICULE DE BREVET EUROPEEN

(11) **EP 0 306 398 B1**
(45) Date de publication et mention de la délivrance du brevet: **03.02.1993**
(21) Numéro de dépôt: 88402176.7
(22) Date de dépôt: 29.08.1988
(51) Int. Cl.: A62D 3/00

(54) **Procédé chimique de destruction de produits organiques halogénés**
Chemisches Verfahren zur Vernichtung von halogenierten organischen Produkten
Chemical process for the destruction of halogenated organic products

(30) Priorité: 03.09.1987 FR 8712248
(43) Date de publication de la demande: 08.03.1989
(73) Titulaire: ELF ATOCHEM S.A., 92800 Puteaux (FR)
(72) Inventeur: Commandeur, Raymond, F-38220 Vizille (FR); Ghenassia, Elie, F-38100 Grenoble (FR); Gurtner, Bernard, F-38000 Grenoble (FR)

(56) Documents cités:
- EP-A- 0 021 294
- EP-A- 0 118 858
- EP-A- 0 225 849
- EP-A- 0 250 748
- US-A- 4 574 013
- THE JOURNAL OF ORGANIC CHEMISTRY, vol. 44, no. 26, 21 décembre 1979, pages 4979-4981, American Chemical Society, Easton, PA., US; B.V. LAP et al.: "Sodium-ethanol: A superior reagent for the reductive dehalogenation of polychlorinated alicyclic molecules"

## Description

La présente invention concerne un procédé de destruction de produits halogènés aryliques contenus dans un produit organique non halogèné tel qu'un polyarylalcane ou une huile minérale.

On a déjà proposé dans l'art antérieur d'enlever les PCB (polychlorobiphenyles) contenus dans des huiles diélectriques de transformateurs ou des huiles de lubrification par extraction avec du méthanol (brevet US 4387018). Le méthanol est ensuite séparé des PCB par distillation puis recyclé. Ce procédé permet de réduire de 70 % la quantité de PCB. Le brevet européen EP 99951 propose de traiter des produits semblables par le sodium en dispersion de particules supérieures à 10 µm. La demande de brevet européen EP 107404 décrit le traitement d'une huile de transformateur contenant 652 ppm de PCB par des sels de sodium d'un polyéthylène glycol. Ces procédés ont l'inconvénient de nécessiter des séparations et des recyclages ou de manipuler du sodium. La demande de brevet européen EP 21294 décrit la destruction des dioxines en particulier des anisoles chlorés contenant 39,7 ppm de 2,3,7,8-tétrachlorodibenzo-p-dioxine, en faisant réagir ces produits sous pression avec du méthylate de sodium dans le méthanol à 160°C. De plus un article de Gyula Pfeifer et Terez Flora dans la revue hongroise MAGY. KEM. FOLYOIRAT 71 (8), 343-6 (1965) explique que le méthylate de sodium peut commencer à se décomposer entre 120 et 140°C.

Le brevet EP 225 849 décrit la destruction de produits organiques chlorés en les mettant dans un solvant puis en ajoutant du sodium et un alcool. On peut après la destruction suivie d'une extraction, réutiliser le solvant pour une opération ultérieure de destruction.

La demande EP 250 748 sous priorité du 25 Juin 1986 et publiée le 7 Janvier 1988 concerne la purification d'une huile pour y éliminer les impuretés organiques chlorées à l'aide d'alcoolates solubles dans cette huile
On a maintenant trouvé un procédé beaucoup plus simple et très efficace.

La présente invention concerne un Procédé de destruction de produits halogènés aryliques contenus dans un produit organise non halogèné tel qu'un polyarylalcane ou une huile minérale tel que
a) Ces produits sont mis en contact avec au moins un alcoolate de métal alcalin anhydre sous forme de poudre le temps nécessaire pour convertir les halogènes organiques en halogènes inorganiques,
b) la quantité d'alcoolate est en excès par rapport à la stoechiométrie basée sur la quantité d'halogène,
c) l'alcoolate est choisi parmi le méthylate, l'éthylate, le propylate ou l'isopropylate de sodium, lithium ou potassium,
d) la température est supérieure à 220°C,
e) on récupère par distillation le produit organique non halogéné.

L'invention s'intéresse plus particulièrement aux produits contenant des carbones aryliques substitués par du chlore et/ou du brome. Dans cette famille on trouve par exemple les dioxines chlorées ou bromées, les dibenzofurannes chlorés ou bromés, les (polychloro)biphényles, les (polybromo)biphényles, les (polybromo)diphényléthers, les (polychloro)diphényléthers et les produits selon la revendication 3.

Bien que l'invention permette la destruction de tout produit arylique halogéné, elle est avantageusement mise en oeuvre pour des produits contenant moins de 1 % en poids d'halogène et de préférence moins de 1000 ppm.

De préférence on utilise le méthylate de sodium en poudre. La stoechiométrie étant une fonction alcoolate par atome d'halogène à éliminer on utilise une quantité d'alcoolate en excès par rapport à cette stoechiométrie. On obtient une très bonne dehalogénation en utilisant un excès de 5 à 10 fois la stoechiométrie. Par exemple si un mélange contient des PCB en proportion de 100 ppm exprimés en chlore, on utilise une quantité de méthylate de sodium de 0,14 %.

On ne sortirait pas du cadre de l'invention en ajoutant avec l'alcoolate un autre produit pouvant transformer le chlore organique en chlorure inorganique comme par exemple le carbonate de sodium, ou un autre agent alcalin.

Avantageusement la mise en contact des produits organiques halogénés avec l'alcoolate est effectuée sous agitation par exemple dans un réacteur agité ou une colonne garnie, ou tout autre dispositif permettant une agitation suffisante pour que l'alcoolate soit bien dispersé et soit au contact des produits halogénés le temps nécessaire à leur destruction. La réaction peut être effectuée en continu ou en discontinu. La cinétique de réaction augmente avec la température. On peut utiliser une température comprise entre 220 et 300°C, on préfère opérer entre 250 et 290°C. Selon les propriétés physiques des produits (tension de vapeur) on opère à la pression atmosphérique ou sous pression plus élevée. La durée de réaction est fonction des quantités d'halogène organique, de la température, de la quantité d'alcoolate, des conditions d'agitation pour effectuer une bonne mise en contact des réactifs ; elle est habituellement comprise entre 30 minutes et 10 heures.

L'invention est particulièrement utile pour détruire les produits halogénés aryliques contenus dans un mélange par exemple un liquide diélectrique non halogéné ou une huile minérale contenant des PCB. On applique à ce produit contenant les PCB ou d'autres produits chlorés le procédé de l'invention, puis on sépare par exemple par distillation les produits halogénés inorganiques des autres produits. On obtient ainsi une huile minérale, un diélectrique exempt de chlore organique.

Pour être sûr de faire une déhalogénation la plus complète possible on utilise un excès d'alcoolate. Quand on traite un fluide diélectrique qui contient quelques centaines de ppm de produits chlorés aromatiques à la fin de la réaction, on obtient le diélectrique, du chlorure NaCl, les produits de transformation des produits chlorés aromatiques, et le reste d'alcoolate non réagi. Il est très commode de distiller ce mélange pour récupérer le diélectrique pur ne contenant plus de chlore aromatique. Il est prudent quand l'alcoolate utilisé est du méthylate de sodium de ne pas dépasser des temps de séjour dans l'appareil à distiller de 12 heures à 295°C pour éviter une décomposition du méthylate.

Le procédé de la présente invention peut utiliser aussi en complément d'un procédé au carbonate de sodium. Le carbonate de sodium est très facile à manipuler mais ne permet d'enlever que les halogènes aliphatiques ainsi que les halogènes aryliques les plus labiles.

Le procédé de l'invention permet d'obtenir un produit avec une teneur en halogène arylique inférieure à 10 ppm. L'avantage de ce procédé est que, bien que s'appliquant à des produits ayant des atomes d'halogène peu réactifs, il ne nécessite pas l'emploi de solvants ; C'est-à-dire qu'il suffit d'ajouter un alcoolate par exemple dans l'huile contenant les PCB sans avoir l'obligation d'ajouter, en plus de l'alcoolate, de l'alcool correspondant à l'alcoolate comme dans le EP 21294. Ce procédé n'exige pas en fin de traitement, avant de récupérer les produits débarassés des halogènes aryliques, de séparation préalable de l'excès d'alcoolate, en particulier du méthylate de sodium.

Un autre avantage du procédé est que les sous produits formés tels que le chlorure NaCl, les produits halogénés aryliques transformés par l'alcoolate et le reste d'alcoolate non réagi peuvent être détruits facilement par incinération sans générer des produits toxiques.

Les exemples suivants illustrent l'invention sans la limiter.

### EXEMPLE 1

On prend 1000 g de dibenzyltoluène (DBT) contenant 300 ppm de chlore aromatique sous la forme de monochlorobenzyltoluène. Ce mélange est placé dans un réacteur muni d'une agitation rotative, d'un réfrigérant ascendant et d'un injecteur d'azote. Après balayage pendant 15 minutes par un courant d'azote à 100°C, on ajoute 1 % en poids (soit 10 g) de méthylate de sodium. Le milieu est porté à reflux à 285°C, avec agitation et balayage d'azote pendant 3 heures. Le produit est ensuite distillé avec mise progressive du vide jusqu'à 2 mm de mercure de manière à ne pas dépasser 300°C dans le pied. Le distillat obtenu a une teneur totale en chlore aromatique de 3 ppm.

A titre de comparaison, en effectuant le traitement du même produit contenant les mêmes produits chlorés avec du carbonate de sodium, on obtient un produit ayant une teneur totale en chlore aromatique de l'ordre de 100 ppm.

### EXEMPLE 2

On traite du DBT comme dans l'exemple 1 mais avec NaOC₂H₅, KOCH₃, KOC₂H₅, NaOCH(CH₃)₂, dans les conditions de l'exemple 1. Les résultats sont reportés sur le tableau.

### EXEMPLE 3

a) On traite du DBT contenant 1000 ppm de PCB pendant 3 heures à 280°C avec 1 % de méthylate de sodium. On obtient un produit contenant moins de 15 ppm de chlore.
b) Identique à a) sauf que le DBT contient 1000 ppm de tétrachlorobenzyltoluène.

Les résultats sont reportés sur le tableau.

### EXEMPLE 4

a) On traite une huile minérale contenant 1000 ppm de PCB pendant 3 heures à 280°C avec 1 % de CH₃ONa. On obtient un produit contenant moins de 15 ppm d'halogène.
b) Identique à a) sauf que l'huile minérale contient 1000 ppm d'octabromobiphényle.

Les résultats sont reportés sur le tableau.

### EXEMPLE 5

Dans un réacteur muni d'une agitation rotative, d'un réfrigérant et d'un injecteur d'azote, on place 1600 g de DBT et 32 g de méthylate de sodium. La masse est portée à reflux (290°C) sous balayage d'azote et agitation. Le courant d'azote est ensuite arrêté et la sortie du réfrigérant est relié à une cuve à eau. Après traitement pendant 70 heures à 290°C, nous n'observons aucun dégagement gazeux. Le milieu réactionnel, après refroidissement et filtration, révèle :
. qu'il n'y a pas apparition de produits légers dans le filtrat, d'après l'analyse chromatographique,
. que le spectre infrarouge du solide après lavage au monochlorobenzène, à l'hexane et séchage à l'abri de l'air (poids recueilli = 95 % du poids de méthylate engagé) est exactement celui du méthylate de sodium.

**TABLEAU**

| Nature du produit traité | Alcoolate utilisé | Teneur pondérale en halogène sur le produit traité et distillé |
|---|---|---|
| EXEMPLE 2 | | |
| DBT + 300 ppm de chlore sous forme de monochlorobenzyltoluène | 1 % C₂H₅ONa | < 15 ppm |
| | 0,5 % CH₃OK | < 15 ppm |
| | 0,5 % C₂H₅OK | < 15 ppm |
| | 0,5 % (CH₃)₂CHONa | 37 ppm |

| EXEMPLE 3 | | |
|---|---|---|
| DBT + 1000 ppm de PCB (6,5 chlores) | 1 % CH₃ONa | < 15 ppm |
| DBT + 1000 ppm de tétrachlorobenzyltoluène | 1 % CH₃ONa | < 15 ppm |

| EXEMPLE 4 | | |
|---|---|---|
| Huile minérale + 1000 ppm de PCB 6,5 chlores (*) | 1 % CH₃ONa | < 15 ppm |
| Huile minérale + 1000 ppm d'octobromobiphényle (**) | 1 % CH₃ONa | < 15 ppm |

| | | |
|---|---|---|
| (*) Dosage dans le résidu de distillation de 580 ppm de chlore sous forme de chlorure ramené à la quantité d'huile engagée. | | |
| (**) Dosage dans le résidu de distillation de 846 ppm de brome sous forme de bromure, ramené à la quantité d'huile engagé. | | |

## Revendications

1. Procédé de destruction de produits halogènés aryliques contenus dans un produit organique non halogèné tel qu'un polyarylalcane ou une huile minérale tel que
a) Ces produits sont mis en contact avec au moins un alcoolate de métal alcalin anhydre sous forme de poudre le temps nécessaire pour convertir les halogènes organiques en halogènes inorganiques,
b) la quantité d'alcoolate est en excès par rapport à la stoechiométrie basée sur la quantité d'halogène,
c) l'alcoolate est choisi parmi le méthylate, l'éthylate, le propylate ou l'isopropylate de sodium, lithium ou potassium,
d) la température est supérieure à 220°C,
e) on récupère par distillation le produit organique non halogénè.

2. Procédé selon la revendication 1 caractérisé en ce que les produits halogénés aryliques sont des produits contenant des carbones aryliques substitués par du chlore et/ou du brome.

3. Procédé selon la revendication 2, caractérisé en ce que les produits contenant des carbones aryliques sont des benzyltoluènes ou des triphénylméthanes ou leurs homologues supérieurs.

4. Procédé selon la revendication 2, caractérisé en ce que les produits contenant des carbones aryliques sont des PCB ou des dioxines ou des dibenzofurannes.

5. Procédé selon l'une des revendication 1 à 4, caractérisé en ce que la température est comprise entre 220 et 300°C et de préférence entre 250 et 290°C.

6. Procédé selon l'une des revendications 1 à 5, caractérisé en ce que l'alcoolate est de preference du methylate de sodium.

## Claims

1. Process for destroying halogenated aryl products contained in a nonhalogenated organic product such as a polyarylalkane or a mineral oil such that
a) these products are brought into contact with at least one anhydrous alkali metal alcoholate in powder form for the time needed to convert the organic halogens into inorganic halogens,
b) the quantity of alcoholate is in excess in relation to the stoichiometry based on the quantity of halogen,
c) the alcoholate is chosen from sodium, lithium or potassium methylate, ethylate, propylate or isopropylate,
d) the temperature is above 220°C, and
e) the nonhalogenated organic product is recovered by distillation.

2. Process according to Claim 1, characterised in that the halogenated aryl products are products containing chlorine- and/or bromine-substituted aryl carbons.

3. Process according to Claim 2, characterised in that the products containing aryl carbons are benzyl toluenes or triphenylmethanes or their higher homologues.

4. Process according to Claim 2, characterised in that the products containing aryl carbons are PCBs or dioxins or dibenzofurans.

5. Process according to one of Claims 1 to 4, characterised in that the temperature is between 220 and 300°C and preferably between 250 and 290°C.

6. Process according to one of Claims 1 to 5, characterised in that the alcoholate is preferably sodium methylate.

## Patentansprüche

1. Verfahren zur Beseitigung von Halogenaromaten, die in nicht halogenierten organischen Produkten wie Polyarylalkanen oder Mineralölen derart enthalten sind, daß
a) diese Halogenaromaten zumindest mit einem wasserfreien und pulverförmigen Alkalimetall-Alkoholat so lange in Kontakt gebracht werden, bis die organischen Halogenide in anorganische Halogenide überführt worden sind.
b) das Alkoholat im Überschuß relativ zur Menge an Halogenid eingesetzt wird,
c) das Alkoholat ein Natrium-, Lithium- oder Kalium-Methylat, -Ethylat, -Propylat oder -Isopropylat sein kann,
d) die Temperatur über 220°C liegt,
e) das nicht halogenierte organische Produkt durch Destillation zurückgewonnen wird.

2. Verfahren nach Anspruch 1, dadurch gekennzeichnet, daß die Halogenaromaten Substanzen sind, die chlor- und/oder bromsubstituierte aromatische Kohlenstoffatome enthalten.

3. Verfahren nach Anspruch 2, dadurch gekennzeichnet, daß die Substanzen, die aromatische Kohlenstoffatome enthalten, Benzyltoluene oder Triphenylmethane beziehungsweise ihre höheren Homologen sind.

4. Verfahren nach Anspruch 2, dadurch gekennzeichnet, daß die Substanzen, die aromatische Kohlenstoffatome enthalten, Polychlorbenzole, Dioxine oder Dibenzofurane sind.

5. Verfahren nach einem der Ansprüche 1 bis 4, dadurch gekennzeichnet, daß die Temperatur zwischen 220 und 300°C liegt, und zwar vorzugsweise zwischen 250 und 290°C.

6. Verfahren nach einem der Ansprüche 1 bis 5, dadurch gekennzeichnet, daß das Alkoholat vorzugsweise Natriummethylat ist.
